# EUROPEAN PATENT APPLICATION

(11) **EP 4 693 136 A1**
(43) Date of publication of application: **11.02.2026**
(21) Application number: 24778368.1
(22) Date of filing: 23.02.2024
(51) Int. Cl.: G06Q 10/30, B65B 57/00, B65D 25/20, G06Q 30/0207, G07G 1/00

(54) **PRODUCT DATA MANAGEMENT DEVICE**

(30) Priority: 27.03.2023 JP 2023049180; 21.08.2023 JP 2023134159
(71) Applicant: Teraoka Seiko Co., Ltd., Tokyo 146-8580 (JP)
(72) Inventor: UCHIDA, Hideki, Tokyo, 146--8580 (JP); KOBAYASHI, Kentarou, Tokyo, 146--8580 (JP); OKAZAKI, Mami, Tokyo, 146--8580 (JP)
(74) Representative: Osha BWB
(86) International application number: PCT/IB2024/051770
(87) International publication number: WO 2024/201159

(57) **Abstract**

A product data management device comprising a reception unit that receives the designation of a product to be weighed, a tray information acquisition unit that acquires tray information of a tray used for the product, and a determination unit that, when designation of the product has been received by the reception unit, determines, on the basis of the tray information acquired by the tray information acquisition unit, whether the tray used for the product is a first tray that is discarded or a second tray that is reused, said product data management device further comprising an output unit that, when it is determined by the determination unit that the tray used for the product is the second tray, outputs a message indicating this fact.

## Description

### Technical Field

The present invention relates to a product data management device for operation involving a reusable tray.

### Background Art

As can be seen in Patent Document 1 as well, trays are used when packaging products using a packaging machine.

### Prior Art Documents

### Patent Documents

[Patent Document 1] JP H02-127213 A

In this regard, due to environmental problems, store operation is attracting attention in terms of disposal loss and waste material reduction, and measures such as reuse and recycling of trays are also required.

The present invention is a product data management device capable of using not only a normal tray (a disposable tray not intended for reuse) but also a reusable tray, and one object of the present invention is to provide a product data management device provided with various functions such as acquisition, identification, and output of data particularly useful for identifying and managing reusable trays from normal trays.

### Summary of Invention

In order to achieve the foregoing purpose, the product data management device according to the present invention is provided with reception means for receiving a product specification, tray information acquiring means for acquiring tray information of a tray to be used for the product, and determining means for determining, when the product specification is received by the first reception means, whether the tray to be used for the product is a disposable first tray or a second tray to be reused, based on the tray information acquired by the tray information acquiring means, and is provided with output means for outputting a message when the determining means determine that the tray to be used for the product is the second tray.

### Brief Description of Drawings

FIG. 1 is a functional block diagram illustrating a hardware configuration of the product data management device according to an embodiment of the present invention.
FIG. 2 is a perspective view illustrating one example of the external configuration of a product data management device having the above hardware configuration.
FIG. 3 is a functional block diagram illustrating a software configuration of the product data management device according to an embodiment of the present invention.
FIG. 4 is one example of a screen displayed on a product data management device according to an embodiment of the present invention, and illustrates a setting screen of tray information.
FIG. 5 is one example of a screen displayed on a product data management device according to an embodiment of the present invention, and is a diagram illustrating a screen for registering settings of packaging, trays, and labels for products.
FIG. 6 is one example of a screen displayed on a product data management device according to an embodiment of the present invention, and is a diagram illustrating a label issuance operation screen.
FIG. 7 is a diagram illustrating one example of a label issued by a product data management device according to an embodiment of the present invention.
FIG. 8 is a processing flow diagram illustrating one example of a flow of processing executed by a product data management device according to an embodiment of the present invention.
FIG. 9 is a processing flow diagram illustrating another example of a processing flow executed by a product data management device according to an embodiment of the present invention.
FIG. 10 is a diagram illustrating one example of data set in a deposit master in the product data management device according to a modification of the present invention.
FIG. 11 is a diagram illustrating one example of a screen for setting a deposit in the product data management device according to a modification of the present invention.
FIG. 12 is a diagram illustrating one example of a label issuance operation screen in the product data management device according to a modification of the present invention.
FIG. 13 is a diagram illustrating one example of a screen that is displayed continuously on a label issuance operation screen and on which deposit information is displayed in the product data management device, according to a modification of the present invention.

### Embodiment of Invention

### Summary

The product data management device according to an embodiment of the present invention will be described with reference to the drawings.

The product data management device according to the present embodiment manages reusable trays used when providing products to customers, and causes a store employee serving as an operator and a customer to actively recognize whether the trays are reusable trays.

Note that for the convenience of description, trays that are rented to customers and reused are "reusable trays" (the "second tray" in the Scope of Patent Claims), disposed of for one-time use without reuse (disposable), or a tray which is normally used and not intended for reuse such as a tray which is a conventional recycling object is called a "normal tray" (the "first tray" in the Scope of Patent Claims), and when it is not distinguished whether it is a "reusable tray" or a "normal tray," it is simply called a "tray."

The reusable tray may be a metal or resin bottle, case, or the like which can be repeatedly washed and reused. When a store rents a reusable tray to a customer, the store receives a deposit (deposit) of a predetermined amount from the customer and refunds the deposit in response to the return of the reusable tray.

Note that in the present embodiment, information such as the type of tray and/or the amount of security deposit of the reusable tray is attached to the reusable tray. The information may be attached to the reusable tray by a label printed with an RFID tag or a coded symbol mark or printed on the reusable tray itself. However, reusable trays are washed and reused, and thus when RFID tags or labels are used, it is preferable to make the RFID tags or labels from a water-resistant material, or when printing, to cover them with a film to make them durable against water, wind, and dust. Whether the tray is a reusable tray can be determined by imaging a tray on which a product is placed and analyzing the shape of the side surface and bottom surface of the tray or the tray portion visible in a plan view in the captured image. Note that the tray can be identified not only by a captured image before products are served on the tray but also by a captured image after products are served on the tray.

Thus, by reading information on the RFID tag and the label and analyzing the captured image, it is possible to determine the amount of the deposit to be refunded to the customer by specifying the amount of the deposit based on the tray type of the reusable tray or acquiring information on the amount of the deposit directly as described below.

In the present embodiment, as the products served or placed on the tray, for example, foods such as meat, fresh fish, side dishes, vegetables, greens, and fruits are assumed. Note that the products placed on the trays are packaged according to the manner in which they are provided. However, this does not preclude the handling of products that are not sold by volume, and products that are not sold to customers, such as those that are provided free of charge to customers as promotional products, are also included in products.

### Product data management device 1

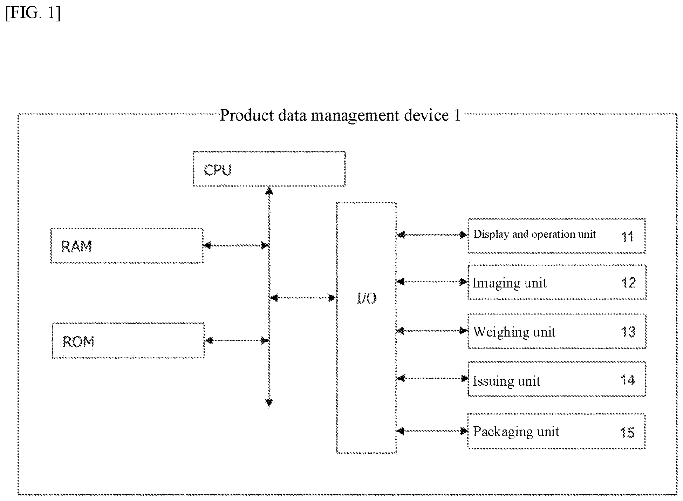

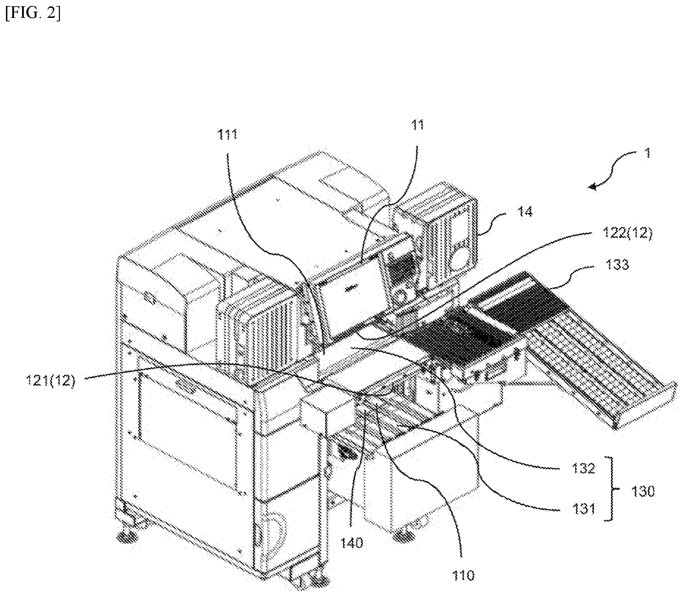

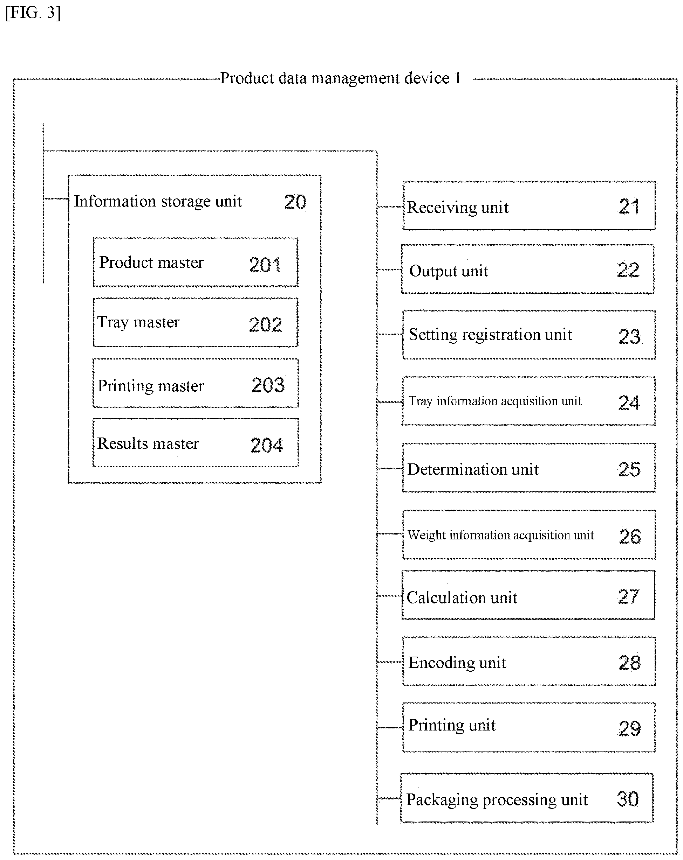

FIG. 1 illustrates one example of a hardware configuration provided in a product data management device 1, and FIG. 2 illustrates one example of an exterior configuration of the product data management device 1 provided with the hardware configuration. FIG. 3 illustrates one example of a software configuration provided to the product data management device 1. Note that the present embodiment exemplifies a scene in which a product data management device 1 is used in providing a product to a customer in a store such as a supermarket.

In the following example, the product data management device 1 packages a product to be packaged which is a product placed on a tray, and outputs information of the tray. In the present embodiment, the product data management device 1 has the functions of packaging items placed on a tray, taring the items placed on the tray to determine the price, and issue labels to be affixed to the packaged products, and is also called a weighing and packaging pricing machine.

Note that in a store, a POS terminal for performing accounting from the registration of the product is provided together with the product data management device 1 based on a label issued to the product by the product data management device 1. This POS terminal is appropriately equipped with a touch panel display for inputting and outputting information by referring to a master stored in the terminal itself or another server, code reading means such as a scanner or CCD camera for obtaining encoded information from a label, tag reading means for obtaining information stored in an RFID tag, payment means for executing payments based on cash or credit card, receipt issuing means for issuing a receipt after the settlement process, and the like.

Note that the settlement processing of the product in the POS terminal includes the payment of the security deposit of the reusable tray, and thus the security deposit is a tax-free item, and thus it may be set so that only settlement by cash is possible. That is, even when the customer selects settlement without cash, settlement processing is performed by a payment method according to the customer's request except for the security deposit, and payment by cash is requested for the security deposit. Conversely, when the customer selects settlement by cash, payment by cash is accepted in a lump sum.

Furthermore, regardless of the present embodiment, the product data management device 1 of the present invention may be configured to have a proper specification according to a function required by each department in the store regardless of the embodiment, and may be realized by a weighing device (weighing label printer), a label printer having no weighing function, a portable mobile printer, and the like. The product data management device 1 may also be provided with some or all of the functions of a POS terminal.

Furthermore, the product data management device 1 of the present invention can also be realized as a system in which the functional units necessary for executing functions are distributed across multiple terminals and devices configured to be able to communicate with each other, such as a store controller that handles core tasks such as inventory management and order management, a POS terminal that performs everything from product registration to accounting, a packaging device that packages the items to be packaged, or a label issuing device such as a printer that issues labels. The product data management device 1 may also be used as a console, and various data registration and processing may be executed by a server or the like on the cloud.

### <Hardware Configuration>

The product data management device 1 has an arithmetic unit such as a CPU (Central Processing Unit) and memory devices such as RAM (Random Access Memory) and ROM (Read Only Memory), and is connected to a display and operation unit 11, an imaging unit 12, a weighing unit 13, an issuing unit 14, and a packaging unit 15 via an interface circuit.

The CPU is a central processing unit that controls the operation of the product data management device 1 by reading and executing various programs stored in the ROM.

The ROM is a read-only memory, and stores various information used by the CPU, including programs.

The RAM is a memory which can be read from and written to, and stores various registered information and information generated by processing based on the registered information.

The display and operation unit 11 is means for displaying various kinds of information and accepting operations of a user. The present embodiment is configured from, for example, a touch panel display.

An operator such as a store employee can edit and confirm information by displaying printing data and tray information on the display and operation unit 11, and can perform a designated input of product and an issuing operation of a label.

Note that the display and operation unit 11 may be composed of a store employee side display unit displaying information on the store employee side and a customer side display unit displaying information on the customer side. This configuration is preferable when the product data management device 1 has the functionality of a POS terminal, in which case the store employee can check the registration status of the products to be purchased on the store employee's display unit and perform registration operations for the products to be purchased. Furthermore, the customer can confirm the product registered by the customer-side display unit and, when necessary, perform an approval operation or the like for the product to be purchased.

Moreover, the display and operation unit 11 may be provided with a combination of input means such as a physical mechanical key and a switch, and the input means and the output means may be configured separately, such as physical mechanical keys and a liquid crystal display.

The imaging unit 12 is a functional unit for performing object scanning or the like by imaging a tray, and is realized by a CCD camera or the like. Note that a sensor such as a photoelectric sensor for measuring the size of the tray or the like may be provided in place of or in addition to the function of object scanning by the imaging unit 12. Thus, information such as the size, appearance shape, and color shade of the tray can be acquired. Note that when an image or an identification code indicating whether the tray is a normal tray or a reusable tray is attached to the tray, the image or the identification code can be acquired.

A weighing unit 13 measures the weight of an object to be weighed placed on a prescribed placing surface such as a product (a product for sale by weight) or a container.

This weighing unit 13 measures the weight of the product, for example, using a weight detection method using a load cell. More specifically, the weighing unit 13 is composed of a weight detection unit and an A/D converter, and the A/D converter converts an analog signal input from the weight detection unit into a digital signal. Thus, taring is performed on the packaged object placed on the tray from the measurement result by referring to the reference value of the tare weight, and the weight of the packaged object can be displayed on the display and operation unit 11.

Note that when each functional unit is provided on the placing surface of the weighing unit 13 so that object scanning (or measurement by a sensor) by the imaging unit 12 can be executed, object scanning (measurement) and measurement of an object can be performed on the placing surface.

An issuing unit 14 issues a label to be stuck to the product or the like. That is, the issuing unit 14 prints prescribed print contents on a recording medium such as paper or a sticker to prepare a label, and discharges the label from a prescribed issuing port.

Note that when the label is a sticker, the issuing unit 14 may further have a function of adhering the issued label to a prescribed part of the packaged product.

A packaging unit 15 packages the object to be packaged placed on the tray, together with the tray. For example, a packaging film is fed from a film roll, the packaging film is stretched on a tray on which an object to be packaged is placed, the packaging film is cut, and the object to be packaged is wrapped using the packaging film.

Here, the external configuration of the product data management device 1 provided with the hardware configuration described above is illustrated in FIG. 2.

The product data management device 1 illustrated in FIG. 2 is provided with an infeed unit 110 opened facing the front, and the inner bottom surface of the infeed unit 110 is an infeed path 131 for guiding product to a weighing area 140. The infeed unit 110 communicates with a weighing area 140 for weighing the product. The product guided to the infeed unit 110 is lifted upward in the product data management device 1 and carried out through a outfeed path 132 from a outfeed unit 111 opened facing the front face upward in the infeed unit 110. The infeed path 131 is composed of, for example, a plurality of belt conveyors. The outfeed path 132 may be, for example, an inclined surface or a passive roller. Note that each configuration of the infeed path 131 and the outfeed path 132 is not limited to the above and may be any configuration. The infeed path 131 and the outfeed path 132 are collectively referred to as a feed path 130.

The product data management device 1 measures the product in a measuring area 140 via the weighing unit 13, and adjusts the amount, the folding amount and the tension of a film or the like used for packaging based on the size of the product in the width direction. Then, the product data management device 1 packages the product with a film or the like by a packaging unit 15 provided inside the product data management device 1. The product data management device 1 also issues a label on which information on product is printed by an issuing unit 14, and adheres the issued label on the upper surface of the packaged product. A series of operations of the product data management device 1 is automatically performed.

The imaging unit 12 is provided so as to image on the feed path 130. More specifically, a plurality of imaging units 12 are provided to capture images of the infeed path 131 and the outfeed path 132, respectively. The first imaging device 121 is disposed, for example, above the infeed path 131 and facing downward to the top surface of the infeed unit 110. The second imaging device 122 is disposed, for example, above the transport path 132 and facing down to the top surface of the transport unit 111. As a result, the image picked up by the first imaging device 121 includes a product before being carried in the product data management device 1 and a tray in which the product is put. Furthermore, the image captured by the second imaging device 122 includes products that have been carried out from the product data management device 1 and packaged.

Further, the product data management device 1 may convey the packaged product to a label underlabeling device (not illustrated) provided on the downstream side in the conveying direction by a discharge conveyor 133 provided on the product data management device 1 side. An underlabel attachment device is provided with a plurality of drive rollers, for example, and is attached to the bottom surface of a product conveyed by a movable roller by means of an underlabel, in which an item that cannot be displayed is printed on a label stuck on the upper surface side of a product, is stuck and conveyed to a separate device disposed downstream in the product conveying direction.

### <Software Configuration>

A product data management device 1 includes an information storage unit 20, a reception unit 21, an output unit 22, a setting registration unit 23, a tray information acquisition unit 24, a determination unit 25, a weight information acquisition unit 26, a calculation unit 27, a encoding unit 28, a printing unit 29, and a packaging processing unit 30.

Note that a computer program for executing the functions of these function units may be provided by downloading via a network such as the Internet or recorded and provided in various computer-readable recording media such as CD-ROM.

The information storage unit 20 is a storage unit for storing various kinds of information, and the various kinds of information include, for example, a product master 201, a tray master 202, a print master 203, and a results master 204.

Note that the data stored in the information storage unit 20 may be registered in a cloud server constituted to be capable of communication via the Internet or the like.

The product master 201 is composed of information on product. The data items stored in the product master 201 include, for example, a product code composed of a JAN code, a product name, a measurement category, a unit price, a unit weight, and a tray type.

A measurement category is a category related to measurement, which includes categories such as indefinite, fixed, and fixed amount.

The selling price of a product classified into the measurement category of indefinite supply is determined on the basis of the unit price per unit weight (for example, "100 g") set in advance and the weight (measurement value) to be sold.

The selling price of a product classified into a fixed measurement category is determined for each pack of a predetermined weight (a predetermined amount that is contained within a predetermined upper and lower limit is permitted).

The selling price of a product classified into a fixed-price measurement category is determined based on a preset unit price per unit quantity (for example, "one piece") and the sales quantity entered as a quantity. For products with a fixed measurement category, measurement is not necessary because the sales quantity is determined by the number of items placed regardless of the weight.

The tray type is setting information for specifying the type of the tray consisting of various sizes and weights, ordinary trays or reusable trays, and also functions as an identifier of the tray. On the basis of the tray type, information on a tray on which a prescribed product is placed can be ascertained by referring to the tray master 202 described later.

Note that plurality of trays (for example, five trays) that can be used may be set for one product, and in this case, for example, when starting packaging processing for a product, the operator may select an arbitrary tray from the set plurality of trays.

The tray master 202 is configured from tray information relating to the tray. The content of the tray information may be set for each tray by a manager or the like.

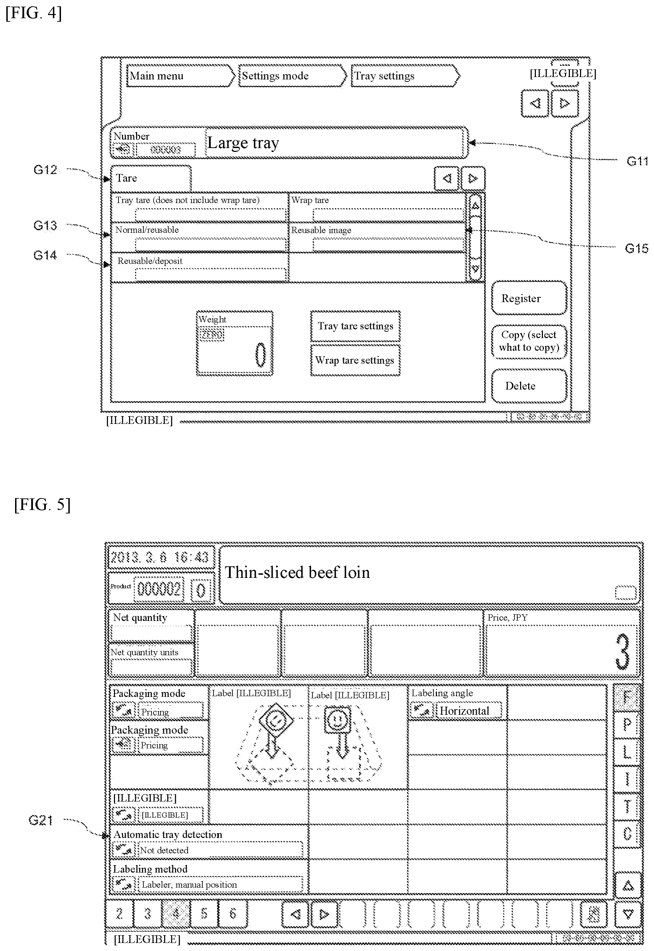

FIG. 4 illustrates an example of the setting screen of the tray information. As illustrated in this example, the data items stored in the tray master 202 include, for example, a tray type G11, a tare weight G12, a reuse classification G13, a security deposit G14 at reuse, and a reusable printing image G15.

The tray type G11 is identification information indicating the type of the tray as described above, and may be defined according to the name and ID of the tray, the part number of the tray manufacturer, the size, the material, and the like. For example, the size of the tray, the size of the tray, and the size of the tray may be specified.

The tare weight G12 is the tare weight of the tray, and the tare weight of a package body such as a wrap for packaging the tray may be set. On the basis of the tare weight information, the NET weight can be obtained by subtracting the tare weight from the total weight of the packaged product during weighing after packaging the product.

The reuse classification G13 indicates whether the tray is a reusable tray or a normal tray.

The security deposit G14 at the time of reuse is a security deposit (deposit) of the reusable tray, and the amount of the security deposit can be set here. The deposit is deposited by the store from the customer when the store lends the reusable tray to the customer, and is refunded from the store to the customer when the customer returns the reusable tray to the store. The amount of the security deposit may be different or uniform depending on the type of tray. Note that when the amount of the security deposit is made uniform, for example, when an input setting is received from a separately provided setting item of information, a predetermined amount of the security deposit is set uniformly for all reusable trays.

The reusable printing image G15 is displayed on a screen such as a label issuing operation screen displayed on a display and operation unit 11 when the tray is a reusable tray, or a captured image for indicating that it is a reusable tray on a label issued to a product is displayed on a screen by the output unit 22 or printed on the label by the printing unit 29.

In addition, the tray master 202 may hold information related to the size and shape such as the width, height, and depth of the tray for each type of the tray. Thus, when information related to the size and shape is acquired by object scanning, for example, an imaging unit 12 or a tray placed at a predetermined position by a predetermined sensor, the kind of the tray can be distinguished by referring to the tray master 202.

Note that when the tray type is distinguished, it can be distinguished not from the tray master 202 but from the trays set in the tray setting information for each product set for each product. In the product master 201, the product information may be set with a reuse classification indicating whether the tray to be used for the product is a reusable tray or a normal tray, and information related to the amount of the security deposit for the reusable tray.

Note that the security deposit G14 at the time of reuse and the reusable printing image G15 are information requiring setting only when the tray is a reusable tray, and thus the information may be displayed only when the reuse classification G13 is set to the reusable tray or may be set by an operator. When the tray is a normal tray, the settings of the security deposit G14 at the time of reuse and the reuse mark image G15 are not applied to the normal tray.

The print master 203 is composed of data to be printed on the label, concretely, print items to be printed and their contents. Printing items include, for example, product number (product number), unit price/price, date and time, advertisement text, designation of origin (origin, and the like), image, content volume/volume unit, upper and lower limit weight, comment, storage temperature, individual identification number/lot number, additive, bar code, store name, manufacturer, tare, product name, processing date and time, and expiration date (expiration date).

Note that the print master 203 may contain not only printing items but also information related to packaging conditions and packaging settings, and the like, in addition to printing contents such as label formats.

The results master 204 is data relating to the label issuance result, and is composed of the information of the issued label.

From the label issuance results, it is possible to ascertain the contents and quantity of the product for which the label was issued, the contents of printing, and the type of tray (whether it is a reusable tray or a normal tray).

The reception unit 21 receives input of prescribed data from the display and operation unit 11.

The reception unit 21 can receive the designation of a product such as a packaged object to be packaged from an operator. The designation of the product can be performed, for example, by designating the product number of the product. Further, an input of the type of the tray can be received from an operator as an identifier of the tray by a reception unit 21.

The output unit 22 causes predetermined data to be output on the display and operation unit 11.

This output unit 22 displays various information display screens and operation screens on a display and operation unit 11, such as an operation screen for issuing a label to be issued to a product, and furthermore, reads information on the product designated in the reception unit 21 from an information storage unit 20 and outputs the information on these screens.

Moreover, the output unit 22 calls the product information on the screen of the label issue operation, and the like, and outputs a statement (determination result) when the determination unit 25, described below, determines whether the tray used when packaging the object to be packaged is a reusable tray or a normal tray.

The output of the determination result may be in a mode capable of distinguishing whether the tray is a reusable tray or a normal tray, for example, may be output only when the tray is a reusable tray or, conversely, may be output only when the tray is a normal tray. The distinction of reusable tray and normal tray may be output so as to be recognizable, respectively, and the setting may be appropriately changed to any pattern.

This allows the operator to easily ascertain whether the tray of products being handled is a reusable tray or a normal tray.

Note that whether the reusable trays are emphasized or the regular trays are emphasized is set as desired according to the ratio of the type of trays (regular trays or reusable trays) displayed in the store or department. However, in any case, the information on the deposit should be printed so that it can be understood.

When the tray used for providing the product is a reusable tray, the output unit 22 outputs, as the selling price of the product, information relating to the total sum of the product price (the selling price of the product itself as the packaged product) and the security deposit of the reusable tray calculated by the calculation unit 27 described later.

The output unit 22 can also generate and output a preview of the label on the basis of information on the product and the tray on the label issuing operation screen or the like.

Note that, in the present embodiment, as described above, the determination result by the determination unit 25, that is, information on whether the tray is a reusable tray or a regular tray, is displayed by the output unit 22 on the label issuance operation screen or the like to notify the operator, but regardless of this, the operator can also be notified by audio guidance, printing on a specified paper medium, etc. Furthermore, a predetermined terminal configured to be capable of communication with the product data management device 1 is also provided, information relating to the determination result can be transmitted to the predetermined terminal, and the determination result can be notified to the operator of the predetermined terminal.

A setting registration unit 23 sets and registers the tray information in the product.

FIG. 5 illustrates an example of a screen for registering packaging, tray, and labeling settings for a product. On the screen, product information called on the basis of the part number is developed, and when various setting registrations are completed, the operation of the packaging can be shifted.

The setting of the packaging includes the packaging mode and the loading speed of the product to be packaged. In the packaging mode, there are settings such as "packaging pricing" which performs the packaging and the pricing in a series, "packaging" which only performs the packaging, "pricing" which only performs the pricing by hand, and "automatic pricing" which only performs the pricing automatically. The loading speed is set to be low speed, usually high speed.

In the setting of the tray, in the automatic retrieval G21 of the tray, a desired tray can be associated with the product by the tray type or the like by retrieval from the tray master 202. In this case, the conditions at the time of packaging and transportation of the product or the contents of the product itself (for example, the operator may be able to automatically search from the tray master 202 and display a predetermined number of tray candidates meeting conditions according to the size and color) based on the captured image of the product acquired by the imaging unit 12.

Note that, regardless of the example illustrated in the drawings, an operator may select an optional tray from a plurality of trays set for the product in advance, or the operator may select an optional tray from all the trays by referring to the tray master 202. In addition, the initial setting tray may be selected with priority, and the tray set when the product was last called may be selected with priority.

The setting of the adhering of the label includes a labeling method concerning whether the label is stuck manually or automatically, a adhering position of the label to the product, and a adhering angle of the label when adhering.

A tray information acquisition unit 24 acquires tray information of a tray used when packaging an object to be packaged.

More concretely, the tray information acquisition unit 24 acquires tray information of the tray related to a prescribed tray type from the tray master 202 at a timing or the like in which a product to be packaged as a product is designated by calling a product number or the like.

Here, the tray type of the tray for acquiring the tray information is, for example, when one tray type is set for a predetermined product designated by calling a product number or the like, the tray is uniquely specified, and the one tray type is applicable. In addition, when one tray type (as long as information that can designate at least one tray is sufficient) is designated and input or the like from an operator when designating a product, the designated tray type is used.

Note that when setting a reuse category and the amount of security deposit for a product, when a normal tray is used, at least a function for switching the reuse category (switching the setting to the normal tray or the reusable tray) is provided. In this case, only the tray information of the normal tray is referred to the tray master 202. Furthermore, in this case, when a plurality of trays are set for the product, all the trays are normal trays and the trays are selected.

Moreover, in another example, when multiple trays are previously associated with a product, then the product-related containers are used. One tray may be automatically selected from a plurality of trays based on a predetermined priority rule or the like to acquire the tray information of the tray, or the operator may select the plurality of trays as selection candidates for a predetermined tray.

Further, after acquiring appearance information related to dimensions, shapes, and the like, such as width, depth, and height of the tray placed at a predetermined position by the imaging unit 12 or a separately provided sensor for the tray, the tray information of the tray set in the tray master 202 may be acquired. In this case as well, when a plurality of trays are associated with a product in advance, tray information of the tray may be obtained by automatically selecting a tray that is prioritized by a predetermined priority rule from the plurality of trays or a tray whose dimensions, shape, or other conditions are closest. A plurality of trays having matching conditions such as dimensions and shapes may be extracted as selection candidates on the basis of the captured image, and tray information may be acquired for the tray selected by the operator from the selection candidates.

Note that when the operator tries to continue the operation or the like without acquiring the tray information, the operator may be informed of an error and requested to perform an operation for acquiring the input of the tray type or the tray information.

The determination unit 25 determines whether a tray set for the packaged object as a tray to be used when the packaged object is a normal tray or a reusable tray, based on the tray information acquired by the tray information acquisition unit 24. Note that the determination processing by the determination unit 25 is executed at a timing such as when the designation of the object to be packaged is received from the operator by the reception unit 21 or when the tray is placed at a predetermined position and an operation for issuing a label is started.

A weight information acquisition unit 26 acquires the measured value by the weighing unit 13 as the product weight.

Note that then the measurement value is acquired, the measurement value can be acquired from a measurement device or the like externally connected to the product data management device 1 via a network or the like without using a measurement unit 13 provided in the product data management device 1 itself. The product weight can also be obtained by input of the number of products.

The calculation unit 27 executes a process for calculating the selling price of a product.

When the tray used for providing products is a reusable tray, this calculation unit 27 calculates as the selling price a total amount obtained by combining the product price and the security deposit of the reusable tray. When the product is a product for sale by weight, the product price is calculated based on the weight and unit price of the quantity selling product. Note that in the calculation of the selling price, the product is a taxable item while the security deposit of the reusable tray is a non-taxable item, and a calculation unit 27 separately adds taxes. In addition, when there is a discount on the product, the product is distinguished from the reusable tray, the discount is applied only to the product, and the discount is not applied to the deposit of the reusable tray.

The encoding unit 28 encodes information on the products to be printed on the label, such as the product code or the selling price of the products, and generates a symbol code such as a barcode or a two-dimensional code.

The generated symbol code is printed on the label, and the POS terminal reads the symbol code to register the product.

In this case, when the tray used for packaging the object to be packaged is a reusable tray, the information on the total sum of the product price and the amount of the security deposit of the reusable tray will be included in the symbol code. When recording sales, it is necessary to manage the sales of the product itself and the deposit separately. Therefore, when the POS terminal reads the symbol code, it is preferable that the product price and the amount of the security deposit can be separately input. For example, the product price and the deposit amount are coded so that they can be distinguished by an application identifier (A.I.) when read by a GS1-128 or the like. Note that the barcode standard or application standard that uses a barcode standard are not limited, and it is only necessary that the product selling price and the deposit can be separately recorded in cooperation with the POS device.

Thus, even when the security deposit of the reusable tray is added to the selling price, the product price (product price) and the amount of the security deposit are separately recorded as the sales recording from the label, and they can be separately totaled and analyzed, and thus the sales can be easily managed by the store.

Note that, regardless of this, when the contents of the symbol code consist only of the product code and product price, by identifying the tray type associated with the product code in the product master 201 and then referring to the tray master 202, it is possible to ascertain tray information such as whether the tray set for the product is a reusable tray or a regular tray, and when it is a reusable tray, the amount of the deposit. As a result, when it is a reusable tray, information indicating that it is the reusable tray may be automatically displayed or printed on the screen or receipt of the POS terminal. In the case of a reusable tray, an input screen or a selection screen of the amount of the deposit may be displayed on the screen of the POS terminal.

The printing unit 29 controls the issuing unit 14 to print the information of the product on a printing medium and to issue a label.

More specifically, information on product to be sold to a customer is dropped into a prescribed printing format to generate printing data. Then, the issuing unit 14 prints the generated printing data on a printing medium and issues a label.

Information regarding the product to be sold to the customer includes, for example, information about the packaged product specified in the reception unit 21, information about the weight of the product acquired by the weight information acquisition unit 26, the selling price of the product calculated by the calculation unit 27, information about the determination result by the determination unit 25, and information about the tray used to place the packaged product.

Note that the information related to the determination result by the determination unit 25 may be in a mode capable of distinguishing whether the tray used for packaging the object to be packaged is a reusable tray or a normal tray as described above. Furthermore, when the tray is a reusable tray, the information pertaining to the tray includes information pertaining to the amount of the security deposit for the reusable tray set in the tray master 202. Further, with regard to the amount of the security deposit, a breakdown of the total amount, that is, the amount of the security deposit in the total amount, may be printed so as to be able to ascertain the total amount of the security deposit together with the total amount of the product price.

All the information can be printed on one label together, or one or more pieces information selected as desired can be printed on one label.

As a result, the label of the product has printed thereon that such is a reusable tray, and thus customers who purchase the product can be aware that they are cooperating with environmental conservation, and they can clearly understand that they can receive a refund by returning the reusable tray to the store. In the case of reusable trays, information on the amount of the deposit is printed on the label, and thus the customer can understand how much the reusable tray will be refunded when it is returned to the store.

The packaging processing unit 30 controls the packaging unit 15 to package the object to be packaged.

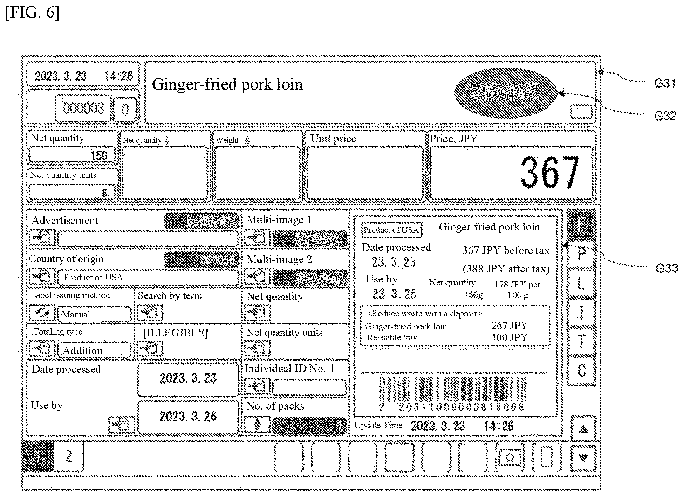

Here, FIG. 6 illustrates a screen when performing a label issue operation.

Print items constituting print data are displayed on a screen. Furthermore, a label image reflecting each printing item is displayed as a preview of the label to be issued in the preview display column G33. Thus, the operator can intuitively ascertain what kind of label is issued when the printing item is edited.

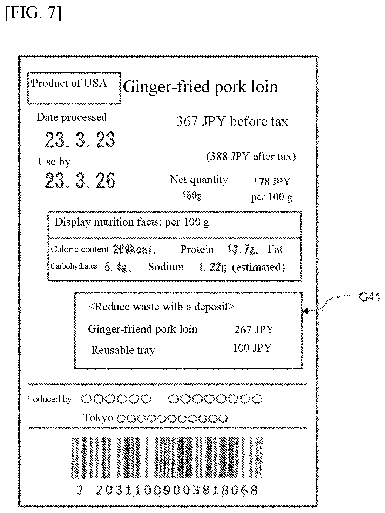

Note that the preview of the label illustrated in FIG. 6 is a simplified image of the label to be issued, and in fact, when the label illustrated in FIG. 7 described later is issued, the image of the label may be accurately previewed without simplifying the image.

This FIG. 6 illustrates a case where reusable trays are used in providing a product, and an image G32 with the word "reuse" is displayed in the name display column G31 of the product so that it can be seen that the reusable trays are used. This image G32 is an example of the reusable printing image. Note that, regardless of this example, the design, content, and display position of the image G32 are optional when it is found that reusable trays are used.

Furthermore, the selling price of the products shall be the sum of the products price and the security deposit of the reused tray when the tray used to provide the products is a reused tray. Note that the selling price is calculated by the calculation unit 27.

FIG. 7 illustrates an example of a label issued for a product that used reusable trays.

A bar code encoding information on the selling price of the product and the product is printed on the label, together with information on the contents of the product such as the name of the product, the expiration date, and the content capacity.

A breakdown of the product price and the amount of the security deposit for reusable trays is printed as information related to the selling price of the product in the breakdown display column G41. The information encoded in the bar code includes printed information appropriately. By adopting GS1-128 as a bar code, information indicating a product code, an amount of content, a tray type, and the like, synthesized to constitute one bar code system is printed numerically below the bar code. Note that, regardless of this, the bar code standard and the application standard that uses the bar code standard are not limited, and various types of standards can be adopted.

Thus, the customer can ascertain that the tray is a reusable tray and the amount of the deposit. Note that, regardless of this example, an image or a display showing the reusable tray may be printed separately.

Note that when the display and operation unit 11 is composed of the store employee side display unit and the customer side display part, the store employee confirms and operates the screen illustrated by the example illustrated in FIG. 6 when the label is issued A screen corresponding to the screen may also be displayed on a customer-side display unit to guide the customer to the fact that the tray is a reusable tray, to display an image, to indicate the amount of the deposit (which may be indicated by a breakdown in the selling price of the product), and the like. Information such as the description of the deposit and the refund method may be stored in an information storage unit 20 as information for the customer and guided to the customer. Specifically, it may be indicated as follows: "If you return it to the service counter after cleaning, the full amount, and when the tray is missing, a part of the deposit, will be refunded depending on the degree of deficiency." Note that the degree of the loss may be set by the store, for example, 80% of the deposit may be refunded when some of the loss can be reused.

Even in an example where the display and operation unit 11 is composed of a store employee side display unit and a customer side display part, when the display unit for the customer is connected to the product data management device 1, the display unit for the customer can achieve the same.

In the functional description of the product data management device 1 according to the present embodiment, the object to be packaged which is packaged in a process leading to the issuance of the label is assumed as the object of the issuance of the label. However, the product to be priced which is not packaged but only priced is also a product to be applied to the present invention, and processing such as tray determination and label issuance is performed in the same manner as the above example only without packaging.

### Flow of Processing

### <Flow from labeling to product sales>

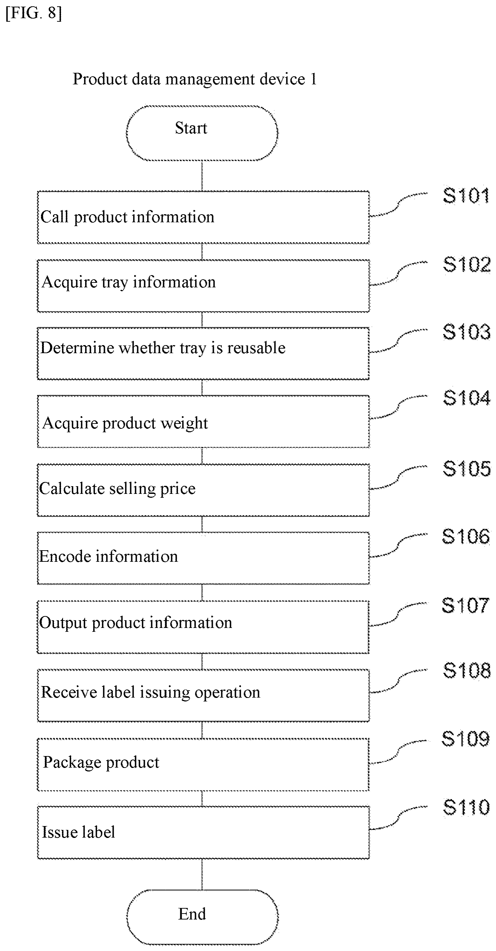

FIG. 8 illustrates one example of a flow of processing executed when a label is issued by the product data management device 1 according to the present embodiment. This example illustrates the flow of processing assumed when the product data management device 1 is configured as a weighing and packaging labeling machine.

In order to issue a label to a predetermined product, an operator calls product information of the predetermined product by specifying the product number of the product on a label issue operation screen (S101). Accordingly, a reception unit 21 receives the designation of the packaged object as the product.

The tray information acquisition unit 24 acquires tray information of the tray pertaining to the tray type from the tray master 202 based on the tray type set for the predetermined products (S102). The determination unit 25 determines whether the tray set for a predetermined product is a reusable tray or a normal tray based on the tray information (S103).

When the tray on which the products are placed is placed on the weighing unit 13, the weight information acquisition unit 26 acquires the measurement value by the weighing unit 13 as the weight of the products (S104).

The calculation unit 27 calculates the selling price of the product based on the unit price and weight of the product (S105). When calculating the selling price of products, when the tray used to provide the products is a reusable tray, the product price and the security deposit for the reusable tray are combined, and the combined amount is calculated as the selling price of the products. The calculation unit 27 adds taxes corresponding to the difference between the taxable items of the product and the security deposit.

The encoding unit 28 encodes information on the products to be printed on the label, such as the product code or the selling price of the products, and generates a symbol code such as a barcode or a two-dimensional code (S106).

The output unit 22 outputs product information and the like on the display and operation unit 11 (S107). Note that, in addition to product information, information extracted or generated by the above processes, such as tray information and symbol codes, is included in the information output here, and an example of the information output screen is as described in FIG. 6.

Note that when the reuse classification is set and managed for the product information registered in the product master 201, a button for switching the reuse classification may be disposed on the operation screen. For example, when the "reusable" mark displayed in the name display column G31 of the product is touched on the screen illustrated in FIG. 6 as a basic function, the mark is switched to the "normal" mark, and even when the reusable tray is selected, it may have a function of handling as a normal tray.

When an operator confirms product information, a preview of a label or the like and executes an operation of issuing the label (S108), a packaging processing unit 30 controls a packaging unit 15 to execute packaging of the product as a packaged object (S109). Furthermore, the printing unit 29 causes predetermined printing items such as product information and symbol codes to be stamped on the printing medium by the issuing unit 14 and causes a label to be issued (S110).

The issued label is stuck to the packaged product by an adhering mechanism provided in the issuing unit 14 or by an operator.

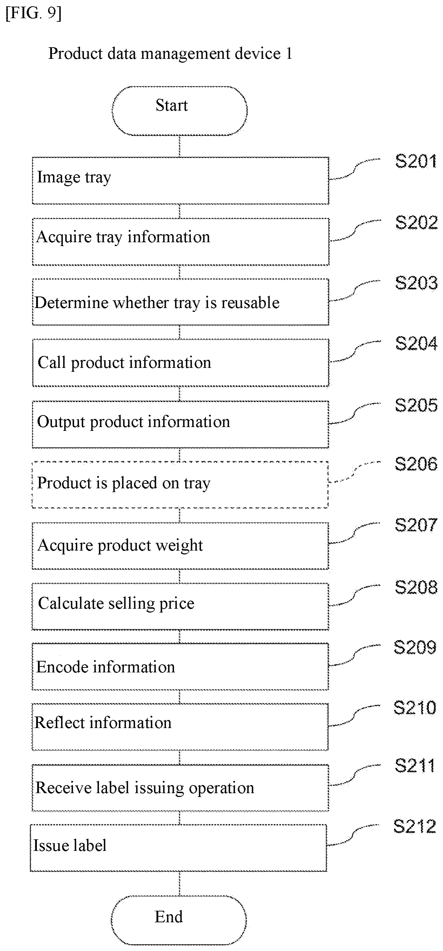

FIG. 9 illustrates another example of a flow of processing executed when a label is issued by the product data management device 1 according to the present embodiment. This example illustrates the flow of processing expected when the product data management device 1 is configured as a bulk measuring instrument, that is, an equipment for measuring and issuing a label for a product for sale by weight (price tag) served on a tray. However, this example, which is described using FIG. 8, indicates a case where the timing of the determination of tray information is different, and is not necessarily limited to the case where the product data management device 1 is a bulk measuring instrument in the implementation of the invention, and also applies to other weighing machines, and the like.

When an operator places a tray at a predetermined position and an operation for issuing a label is started, an imaging unit 12 images the tray (S201). The operator may be a clerk or a customer depending on how the operation is conducted. A prescribed position where the tray is placed is, for example, on the weighing unit 13.

The tray information acquisition unit 24 determines the tray type based on the appearance information pertaining to the size shape and the like of the object scanned tray by referencing the tray master 202, and acquires the tray information of the tray pertaining to the tray type (S202). The determination unit 25 determines whether the tray set for a predetermined product is a reusable tray or a normal tray based on the tray information (S203).

In order to issue a label to a predetermined product, the operator calls the product information of the predetermined product on the screen by specifying the product number or the like (S204). When a reception unit 21 receives the designation of the product in accordance with the request, an output unit 22 refers to the product master 201 and outputs the designated product information on a screen (S205).

Furthermore, when the operator places the products on the tray (S206), the weight information acquisition unit 26 acquires the measurement value by the weighing unit 13 as the product weight (S207).

When "Calculate selling price" (S208) and "Encode information" (209) are subsequently executed, in the same manner as the processes described in "Calculate selling price" (S105) and Encode Information (106) in the examples in FIG. 8, the following results are obtained: Information such as the product weight, the selling price, and the symbol code is reflected in the information displayed on the display and operation unit 11 (S210).

When the operator checks the product information, a preview of the label, and the like, and executes the label issuance operation (S211), the printing unit 29 stamps the predetermined printing items such as the product information and the symbol code on the printing medium by the issuing unit 14 and issues the label (S212). The issued label is affixed to the packaged products or the like by an application mechanism provided by the issuing unit 14 or by an operator as in the example in FIG. 8.

According to the above processing, when the product information is output by the output unit 22, the determination result by the determination unit 25, that is, whether the tray is a reusable tray or a normal tray, is output together with the product information on the screen. This allows the operator to recognize whether the tray being handled is a reusable tray or a normal tray. The fact that such is a reusable tray and the amount of security deposit are printed on the label, and thus these things can be recognized by looking at the label.

Note that when the label is adhered to the product, the product can be settled based on the label. For example, when a POS terminal prepared separately in a store for settlement or a POS function provided in a product data management device 1 reads a symbol code printed on a label of a product, it is possible to obtain Commodity information including information such as a product code and a sales price of the product is acquired, and the product is registered as a product to be purchased. When settlement is performed on the basis of cash or a credit card according to the selling price of the product to be purchased, settlement processing of the product is completed and a receipt is issued. Note that when the tray is a reusable tray, the tray on which the product is placed may be the reusable tray and the amount of the deposit may be printed on the receipt.

### <Flow of Collections and Refund of Reusable Tray>

When the reusable tray to which the customer has been lent becomes unnecessary, the customer can return the reusable tray to the store and receive a refund of the deposit.

The store side discriminates the tray type of the tray based on the offer of the customer and refunds the prescribed security deposit. The information related to the tray type may be judged, for example, by a store employee from the appearance of the tray. Information related to the tray type and other tray information may be stored in an RFID tag and pasted to the reusable tray or coded and directly printed on the reusable tray. As a result, it is possible to appropriately use, for example, a tag reading unit or a code reading unit provided in a terminal capable of executing refunding processing of a security deposit, such as a POS terminal, or to acquire information relating to the tray type from a reusable tray when a store employee or a customer sees the tag reading unit or code reading unit.

Note that, when thus attaching information relating to the tray type to the tray using an RFID tag or the like, for example, each time a product is priced or packaged, the serial number (UID in the case of a tag, or a serial code managed by the tray manufacturer in the case of a barcode) constituting the tray type can be read from the tray, and the tray type can be written using an RFID reader/writer installed on the conveyor that transports the products.

When acquiring information on the tray type, the store employee can acquire information on the amount of the security deposit by referring to the tray master 202. Note that when the amount of security deposit is recorded in the RFID tag, and the like described above, the amount of security deposit can be ascertained by obtaining this.

The store employee operates the POS terminal and refunds the security deposit on the basis of information related to the amount of the security deposit. Thus, the deposit is refunded to the customer and the reusable tray is recovered by the store.

Note that, regardless of the examples described above, the refund of the security deposit may also be made on the basis of the label affixed to the product or the like. By acquiring the amount of the security deposit printed on the label and the product information encoded in the symbol code printed on the label, refund processing can be performed in the same manner as in the above example. Similarly, when the receipt is stamped with the amount of the security deposit or the product information encoded appropriately, a refund can be processed based on this.

### Modification 1

Note that, regardless of the present embodiment above, a management number capable of uniquely identifying the reusable tray may be numbered, and information related to the tare weight of the reusable tray and the amount of security deposit may be associated with the management number and registered in the management master. In this case, when the management number is coded appropriately and printed on a label, or attached to the reusable tray in the form of an RFID tag or symbol code, the management number can be obtained when the product is sold or when a refund is processed, and by referring to the management master, it can be determined whether the tray is a reusable tray, and in the case of a reusable tray, the amount of the security deposit. Therefore, in this case, it is not necessary to input information on the amount of the security deposit from the symbol code printed on the label. Note that in this operation, a POS terminal, a store controller positioned at the upper level of a product data management device 1, or a controller for management may be provided with a management master, and information on the tray may be supplied to the POS terminal in response to an information inquiry based on the management number from the POS terminal.

Moreover, when the reusable trays are individually identified and managed by the management number in this way, the lending status such as the date and time of lending for each reusable tray, the amount of security deposit at the time of lending, and the number of times of lending so far can be managed in detail. As a result, for example, even when the amount of the deposit was lower than usual due to a campaign when a reusable tray was rented out, the amount of the deposit at the time of rental can be refunded to the customer when the reusable tray is returned, and it is also possible to reduce the amount of the deposit to be refunded depending on the period for which the reusable tray was rented out. Furthermore, it is also possible to operate such that the reusable tray is discarded when the number of times of lending reaches a predetermined number.

### Modification 2

In the present embodiment, information indicating whether a tray is a reusable tray or a normal tray is provided on a tray master 202, and a second issuing unit is provided which is different from the issuing unit 14 (hereinafter, a label issued by the issuing unit 14 is referred to as a "first label") A second label (for example, a so-called POP) indicating that the product is a reusable tray may be issued by the second issuing unit and affixed to the product. Note that the second issuing unit is realized, for example, by a labeler configured to be capable of communication with the product data management device 1.

In this case, the product master 201 may provide a setting item of "printing when the tray is a reusable tray" so as to select "printing on the first label," "printing on the second label," and "no printing." When "printing on the first label" is selected, information or an image showing that the printing is a reusable tray is printed on a prescribed printing area (upper or lower part of a normal printing area or at an arbitrary place) set in the printing format of the first label. In the case of "printing on the second label," information and an image showing the reusable tray are not printed on a prescribed print area of the first label, but information and an image showing the reusable tray are printed on the second label. In the case of "no printing," no information or image showing that the label is a reusable tray is printed on either the first label or the second label. It is assumed that this "no printing" setting is used, for example, when a label indicating that the product is a reusable tray is attached to a product by hand.

Note that when a linerless label (linerless label) is used for the first label issued by the issuing unit 14, when information or an image showing that the label is a reusable tray is not printed on the first label, A first label may be issued by shortening the portion corresponding to the printing area of information or an image indicating the reusable tray.

### Modification 3

As illustrated in the setting screen of FIG. 4, the tray type (identifier) of the tray master 202 is operated by providing a unit for determining whether the tray is a normal tray or a reusable tray As another example, the presence or absence of deposit may be registered in the product master 201 for each product. In this example, as described in detail below, a separate deposit master is set up to associate each deposit type with the deposit amount (guarantee amount), tray type, and the like, and when the tray used to package the product is a reusable tray, an optional deposit type is associated with the product and set. Thus, a predetermined deposit type is specified from the product, and a label is printed according to information such as a deposit amount and a tray type associated with the predetermined deposit type.

Note that, in this example, only the information on the packaging conditions is set in the tray master 202, and thus the contents and conditions of the printing control on the deposit are based on the information set in the separately provided deposit master. That is, in this case, in the tray setting illustrated in the example of FIG. 4 above, the reuse category G13, the security deposit G14 for reuse, and the reusable printing image G15 are excluded from the setting items. However, it is preferable to set all related trays in the tray master 202 regardless of whether the deposit is enabled or disabled. However, when scanning tray sizes (tray width, tray depth, and tray height as packaging conditions), not all trays are necessarily defined in the tray master 202. Also, the amount of deposit can be input from the operation screen, and the selection of a reusable printing image to be printed on a label attached to the reusable tray can also be executed from the operation screen.

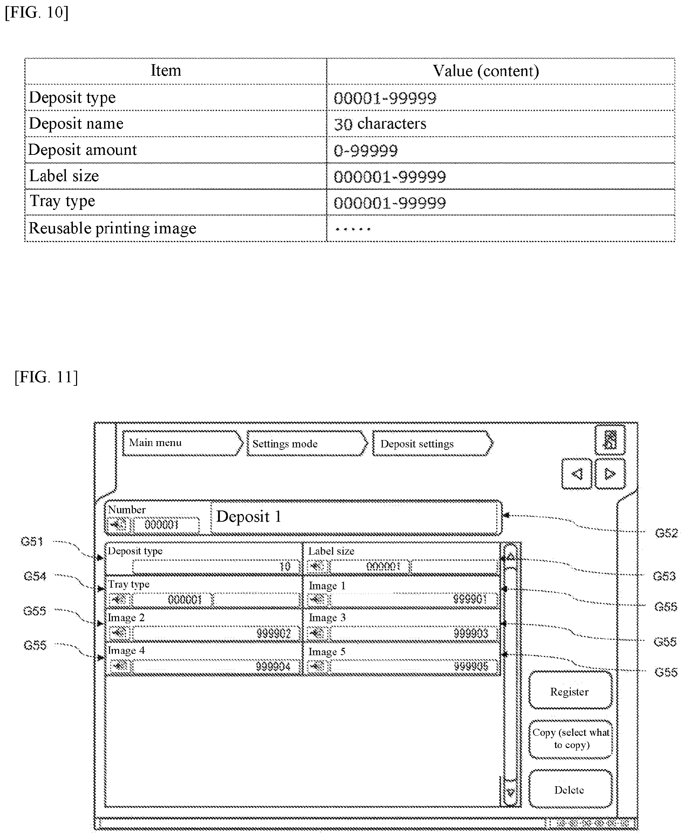

The deposit master consists of information relating to the deposit (deposit). For example, as illustrated in the example of FIG. 10, the deposit name, deposit amount, label size, tray type of reusable tray, reusable printing image, and the like, can be set in the deposit master for each deposit type.

The deposit type is an identification information (identifier) indicating the type of deposit, and can be composed of an ID or the like consisting of a number of a predetermined number of digits, an alphanumeric character or the like, and may also be composed of a deposit name or the like.

The deposit name is a name simply indicating the deposit type, and the name of the associated reusable tray may be used. The deposit name is displayed as a selectable list when a deposit is input or changed on an operation screen, for example.

The deposit amount is the amount of the deposit, but the deposit amount registered in the deposit master is data for printing, and setting is performed separately. Note that it is not necessary to manage the reusable tray individually, and it can be refunded when it can be determined that the tray is the reusable tray at the time of return. For this reason, the deposit amount may be input in the number of deposits at the POS terminal, or the deposit amount may be requested to the customer by being encoded into a symbol code such as a bar code which can be acquired separately from the information on the purchased product and printed on a label or receipt. When encoding in this way, it is preferable that at least the deposit amount can be acquired individually based on the decoded information.

Furthermore, by managing the deposit amount in the in-store system and issuing a label with the tray type and deposit type appropriately coded and printed on it, the deposit amount associated with the tray type and deposit type can be obtained from the in-store system even when the deposit amount is not stored in the product data management device 1.

Note that the information to be encoded in the symbol code may be either one or both of the deposit type and deposit amount, and the encoded symbol code may be output on a label issuing operation screen as well as printed on a label and receipt.

The label size is a size of a label to be used preferentially among labels issued when using a reusable tray, and is composed of, for example, a label size indicated by a specific numerical value or the like and a format (printing format) number of the label.

The tray type is configuration information for identifying the type of reusable tray and also functions as an identifier of the tray. The tray type stored in the deposit master is the tray type of the reusable tray where the deposit is generated among the tray types registered in the tray master 202. When the reusable tray is used, the reusable tray related to the tray type set in the deposit master is used with priority. Based on this tray type, information on the reusable tray used can be understood by referencing the tray master 202.

The reusable printing image is the same as the above, and when the tray is a reusable tray, it is a captured image for indicating that such is a reusable tray on a screen such as a label issuance operation screen displayed on the display and operation unit 11, or on a label issued to a product, and is displayed on the screen by the output unit 22 or printed on the label by the printing unit 29.

Furthermore, FIG. 11 illustrates an example of a setting screen corresponding to the deposit master. Here, the information of the deposit related to the predetermined deposit type (identifier) is called from the deposit master, and the information associated with the deposit type can be set. A deposit type display area G51 that displays a specified deposit type, as well as a deposit name display area G52, a label size display area G53, a tray type display area G54, and a reuse print image display area G55, which are display areas for various information registered in association with the specified deposit type, are provided on the screen, and settings can be changed in each display area. Note that a deposit amount display area for displaying the deposit amount may be provided. However, the deposit amount illustrated here is data for printing as described above, and the setting is done separately.

In this example, a deposit type is set in association with each product in a product master 201. When the product is called during label issuance, the deposit type set for the called product is specified and the When the information of the deposit related to the specified deposit type is acquired from the deposit master by a prescribed acquisition means, the information of the deposit is reflected on the label issue operation screen. The information of the deposit acquired here is set in association with the product only when it is the reusable tray, and thus the information capable of identifying whether the tray used when packaging the product is the reusable tray or the normal tray is constituted. Further, the information of the deposit acquired from the deposit master includes information associated with the deposit type in the deposit master, such as information about the tray such as the tray type, and these information are output in association with the product information by an output unit 22.

The product master 201 may include an item for setting whether to enable or disable deposits for each product. When the deposit is successful, when the product is called (during pricing operation), the tray (reusable tray) associated with the deposit type set for the product is displayed preferentially, and if the deposit is invalid, the tray of the tray type set for the product in the product master 201 is displayed preferentially.

Note that, in this example, since only the packaging conditions are changed in the tray change operation, when the deposit is changed due to a change in the tray or when you want to change it, you need to separately change the deposit type set for the product. In this regard, the label issuance operation screen and the like, may be configured so that the operator can change the tray type and the deposit type at the same time, or when the operator changes the tray type, a dialog box may be displayed allowing the operator to select whether or not to cancel the deposit, and the deposit may be canceled or maintained depending on the selection. In conjunction with the input or change of the deposit type, a predetermined tray type set in the deposit master may also be input or changed to the predetermined tray type.

In addition, in the present example, the determination unit 25 can determine whether the tray used when packaging the products is a normal tray or a reusable tray based on the deposit information associated with the products. That is, when the deposit type is associated with the product, it can be determined that the tray used when packaging the product is a reusable tray, and when the deposit type is not associated with the product, it can be determined that the tray used when packaging the product is a normal tray. The output unit 22 can output information on the tray corresponding to the determination result, that is, information capable of recognizing whether the tray is a reusable tray or a normal tray, together with the product information.

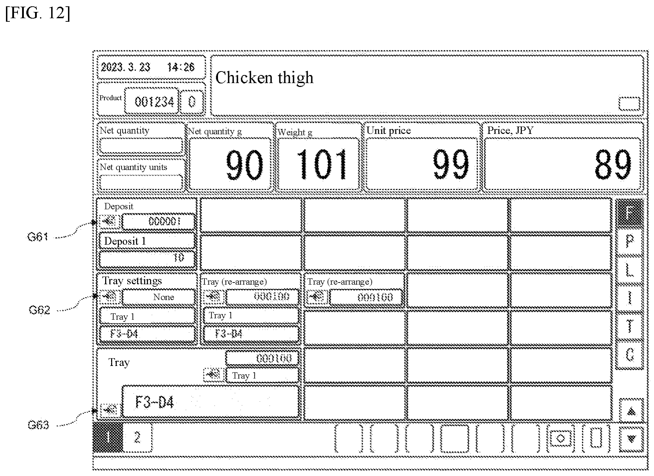

FIG. 12 is one example of the label issue operation (pricing) screen in this example. On the screen, a deposit type button G61, setting buttons G62, G63 of a tray are provided together with the product information of the product specified on the basis of the calling of the product number or the like. Near each button, deposit information or tray information such as the deposit type or tray type associated with the product is displayed, and depending on whether there is deposit information or the tray type, which can be determined to be a regular tray or a reusable tray, it is possible to determine whether the tray used to package the product is a reusable tray or a regular tray. When this button is depressed, the deposit type and the tray type can be changed on the screen on which the label issue operation is executed.

The deposit type button G61 and the tray setting buttons G62 and G63 may display a list respectively by pressing, for example, and the operator may select a predetermined deposit type or tray type from the list.

When changing the tray, a message such as "Please check whether there is a deposit" may be displayed to prompt the operator for confirmation, or a list in which the deposit type can be selected may be displayed to allow the operator to select a predetermined deposit type. Further, after the guidance according to such a message, a list allowing selection of deposit types may be displayed only when the operator selects change of deposit types.

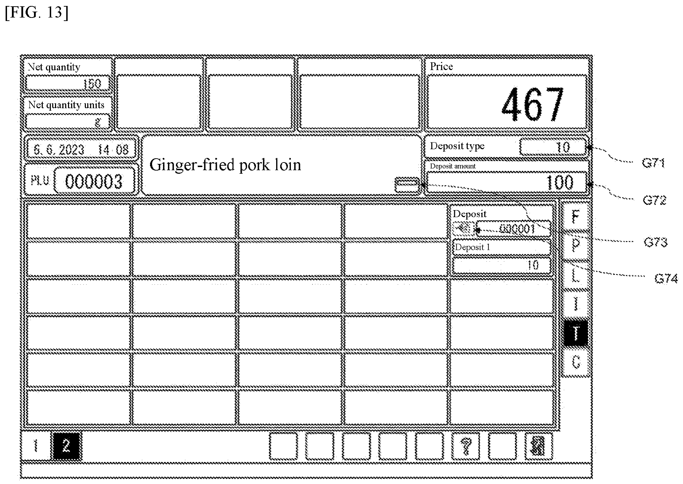

Note that, in addition to the label issuance operation screen shown in FIG. 12, on screens for pricing operations and packaging operations, after a product is identified by calling up a product number on the label issuance operation screen as shown in the example of FIG. 6 above, the deposit type and deposit amount associated with the product may be output together with the product information, as shown in the example of FIG. 13. A display area G71 of a deposit type and a deposit amount display area G72 are disposed side by side as areas for displaying deposit information on a screen, and these are displayed next to a product name display area G73 to easily attract the attention of the operator.

Further, a deposit type button G74 for changing the setting of the deposit type is disposed near the deposit amount display area G72, and thus the deposit amount can be easily recognized when changing or releasing the deposit type, and erroneous operation can be prevented. However, regardless of this example, the deposit type button G74 may be disposed at an appropriate position. A tray type button for changing the setting of the tray type may be provided near the deposit type button G74.

Further, the total amount (467 yen in the example illustrated in the figure) and the price of the product (367 yen in the example illustrated in the figure) may also be indicated in the price display area, and a display area of the amount including the deposit amount may be separately provided. When the product data management device 1 is provided with a customer display device for customers facing the store employee, it is preferable to display the total amount, the price of the product, and the deposit amount so that not only the store employee but also the customer can be confirmed before packaging and pricing.

According to the present embodiment, the setting can be changed from the side of the deposit. Furthermore, the setting of the tray is easily switched, improving operability.

The product data management device 1 according to the embodiment is provided with various functions such as acquisition, identification, and output of data useful for distinguishing and managing the reusable tray from the normal tray, and can realize the operation of the reusable tray in a simple mode in a store or the like. This reduces waste materials such as disposable trays and contributes to the realization of an environmentally friendly society.

Note that, in the present embodiment above, an RFID tag storing information such as the type of tray, the amount of security deposit, or the type of deposit may be attached to the tray, or a symbol code encoding the information may be printed, and the information may be acquired on the transportation route when the product is packaged. In this case, it is preferable to provide a reader (reading means) on the conveyance path so as to appropriately acquire information from the RFID tag and the symbol code. The reader is, for example, an RFID tag reader, a symbol code acquisition scanner, a CCD camera, and the like, and one or a plurality of arbitrary numbers of units can be provided. When the symbol code is printed on the side wall part of the reusable tray, it is preferable that the reader is attached to the side surface side in the conveyance direction on the conveyance path and scanned. In addition, when attaching the RFID tag to a bottom surface or a side wall portion of the reusable tray, a reader may be provided in a tunnel shape along the transport path. That is, by providing a tunnel-shaped housing on the conveyance path and providing readers evenly on the inner peripheral surface thereof, information can be reliably acquired regardless of the direction in which the RFID tag attached to a product passing through the tunnel-shaped housing is directed. According to the mode of acquiring the information of the tray in this way, the information can be systematically acquired and reflected even when the tray type or the deposit type is not set in the product master 201. Note that the symbol code may be printed on the label and pasted without directly printing on the reusable tray, or may be in another form when the symbol code can be attached to the reusable tray in a readable state. Furthermore, the determination unit 25 can determine whether the tray in which products are packaged is a reusable tray or a normal tray based on the tray type and deposit type acquired by reading such an RFID tag or a symbol code.

Moreover, the product management device according to the present embodiment can be realized as a product data management device in which a plurality of terminals and devices configured to be capable of communication with each other are configured so as to dispersedly hold a function unit necessary for performing a function. In one specific example, a weighing device that weighs packaged items and trays, a packaging device that packages packaged items, a label issuing device that issues labels, a console (product data management device) that inputs and outputs information, such as accepting label issuing operations, are connected via an internal communication line such as a LAN, and the registration and processing of various data (for example, functions corresponding to functional units such as the information storage unit 20, setting registration unit 23, the tray information acquisition unit 24, the determination unit 25, the calculation unit 27, and the encoding unit 28) may be performed by a data management server on the cloud. According to this configuration, when a predetermined operation is received on the console, the execution of the function is requested from the console to each device, and the result of the execution of the function is returned to the console.

### Summary of Embodiments

The present invention relates to a product data management device for operation involving a reusable tray.

As can be seen in JP H02-127213 A as well, a tray on which products are placed is used in a packaging machine.

In this regard, due to environmental problems, store operation is attracting attention in terms of disposal loss and waste material reduction, and measures such as reuse and recycling of trays are also required.

One object of the present invention is to manage reusable trays.

In order to achieve the foregoing purpose, the product data management device according to the present invention is provided with first reception means for receiving a product specification, tray information acquiring means for acquiring tray information of a tray to be used for the product, and determining means for determining, when the product specification is received by the first reception means, whether the tray to be used for the product is a normal use first tray or a second tray to be reused, based on the tray information acquired by the tray information acquiring means, and is provided with output means for outputting a message when the determining means determine that the tray to be used for the product is the second tray.

First printing means for, when the determination means determine that the tray to be used for the product is the second tray, printing that fact together with information about the product whose designation has been accepted by the first reception means may be further provided.

Second printing means for, when the determination means determine that the tray to be used for the product is the second tray, printing Information regarding the amount of a security deposit set for the second tray together with information about the product whose designation has been accepted by the first reception means may be further provided.

Second output means for outputting a total amount obtained by adding together the price of the product designated by the first reception means and the amount of a deposit set in the tray information of the second tray when the determination means determine that the tray to be used for the product is the second tray may be further provided.

Encoding means for encoding a selling price of the product designated and accepted by the first accepting means and the amount of the deposit set in the tray information of the second tray so that they can be obtained individually when the determining means determine that the tray to be used for the product is the second tray may be further provided.

Second reception means for receiving an input of an identifier of the tray may be further provided, wherein the tray information acquiring means acquire tray information based on the identifier of the tray accepted by the second accepting means may be provided.

Furthermore, a product data management device according to another aspect of the present invention is provided with reception means for receiving the designation of an item to be priced, imaging means for imaging the tray on which the item to be priced is served, a tray information acquisition means for acquiring tray information of the imaged tray, and determination means for, when the designation of the item to be priced is received by the reception means, determining based on the tray information acquired by the tray information acquisition means whether the tray on which the item to be priced is served is a first tray which is disposable or a second tray which is reused, and is provided with output means for outputting a message to that effect if the determination means determines that the tray on which the item to be priced is served is the second tray.

The product data management device according to yet another aspect of the present invention is provided with: identification means for identifying a product; acquisition means for acquiring information capable of identifying whether a tray used when packaging the product is a reusable tray or a normal tray; and output means for outputting information acquired by the acquisition means, that enables recognition of whether the tray used when packaging the above is a reusable tray or a normal tray.

The output means may associate and output the product information of the product identified by the identification means and the information acquired by the acquisition means.

When the tray is a reusable tray, the output means may output the amount of a deposit for the reusable tray based on the information acquired by the acquisition means.

When the tray is a reusable tray, the output means may output a total amount of a product selling price of the product identified by the identification means and a deposit, based on the information acquired by the acquisition means.

When the tray is a reusable tray, the output means may output the deposit as an individually obtainable code, based on the information obtained by the obtaining means.

Reading means for reading a symbol code attached to a tray may be further provided, wherein the acquisition means acquire information indicating whether the tray used to package the product is a reusable tray or a regular tray according to the reading result of the reading means.

The product data management device according to the embodiment is provided with various functions such as acquisition, identification, and output of data useful for distinguishing and managing the reusable tray from the normal tray, and can realize the operation of the reusable tray in a simple mode, thereby reducing waste materials such as disposable trays and contributing to realizing an environmentally conscious society. When a reusable tray is used for providing the product, the fact that the tray is a reusable tray and the amount of the security deposit, and the like are displayed on the operation screen operated by the store employee or on the label attached to the product, and thus the store employee and the customer can easily understand that the tray is a reusable tray and the recovery rate of the tray can be increased. Furthermore, when recording sales, the product price and the deposit are separately totaled without the operator's knowledge, and thus the sales can be easily managed.

### [Description of Reference Numerals]

1: Product data management device
11: Operation unit
12: Imaging unit
13: Measuring unit
14: Issuing unit
15: Packaging unit
20: Information storage unit
21: Reception unit (first reception means, second reception means)
22: Output unit (first output means, second output means)
23: Setting registration unit
24: Tray information acquisition unit (tray information acquisition means)
25: Determination unit (determination means)
26: Weight information acquisition unit
27: Calculation unit (calculation means)
28: Encoding unit (encoding means)
29: Printing unit (first printing means, second printing means)
30: Packaging processing unit

## Claims

1. A product data management device, comprising:
identification means for identifying a product;
acquisition means for acquiring information capable of identifying whether a tray used when packaging the product is a reusable tray or a normal tray; and
output means for outputting information acquired by the acquisition means, that enables recognition of whether the tray used when packaging the product is a reusable tray or a normal tray.

2. The product data management device according to claim 1, wherein the output means associate and output the product information of the product identified by the identification means and the information acquired by the acquisition means.

3. The product data management device according to claim 1, wherein, when the tray is a reusable tray, the output means output the amount of a deposit for the reusable tray based on the information acquired by the acquisition means.

4. The product data management device according to claim 1, wherein, when the tray is a reusable tray, the output means output a total amount of a product selling price of the product identified by the identification means and a deposit, based on the information acquired by the acquisition means.

5. The product data management device according to claim 4, wherein, when the tray is a reusable tray, the output means output the deposit as an individually obtainable code, based on the information obtained by the obtaining means.

6. The product data management device according to any of claims 1 to 5, further comprising reading means for reading a symbol code attached to a tray, wherein the acquisition means acquire information indicating whether the tray used to package the product is a reusable tray or a regular tray according to the reading result of the reading means.

7. A product data management device, comprising:
first reception means for receiving a product specification;
tray information acquiring means for acquiring tray information of a tray to be used for the product; and
determining means for determining, when the product specification is received by the first reception means, whether the tray to be used for the product is a normal use first tray or a second tray to be reused, based on the tray information acquired by the tray information acquiring means,
and comprising output means for outputting a message when the determining means determine that the tray to be used for the product is the second tray.

8. The product data management device according to claim 7, further comprising first printing means for, when the determination means determine that the tray to be used for the product is the second tray, printing that fact together with information about the product whose designation has been accepted by the first reception means.

9. The product data management device according to claim 7, further comprising second printing means for, when the determination means determine that the tray to be used for the product is the second tray, printing information regarding the amount of a security deposit set for the second tray together with information about the product whose designation has been accepted by the first reception means.

10. The product data management device according to claim 8 or 9, further comprising second output means for outputting a total amount obtained by adding together the price of the product designated by the first reception means and the amount of a deposit set in the tray information of the second tray when the determination means determine that the tray to be used for the product is the second tray.

11. The product data management device according to claim 8 or 9, further comprising encoding means for encoding a selling price of the product designated and accepted by the first accepting means and the amount of the deposit set in the tray information of the second tray so that they can be obtained individually when the determining means determine that the tray to be used for the product is the second tray.

12. The product data management device according to claim 7, further comprising second reception means for receiving an input of an identifier of the tray, wherein the tray information acquiring means acquire tray information based on the identifier of the tray accepted by the second accepting means.
